(19) Europäisches Patentamt
European Patent Office
Office européen des brevets

(11) **EP 2 243 115 B1**

(12) **FASCICULE DE BREVET EUROPEEN**

(45) Date de publication et mention de la délivrance du brevet:
**03.04.2019 Bulletin 2019/14**

(21) Numéro de dépôt: **09710568.8**

(22) Date de dépôt: **12.02.2009**

(51) Int Cl.:
*G06T 5/50* (2006.01)        *H04N 5/349* (2011.01)
*H04N 5/365* (2011.01)      *G06T 7/223* (2017.01)
*H04N 5/232* (2006.01)

(86) Numéro de dépôt international:
**PCT/EP2009/051661**

(87) Numéro de publication internationale:
**WO 2009/101151 (20.08.2009 Gazette 2009/34)**

(54) **CORRECTION D'IMAGES CAPTEES ET STABILISEES**

KORREKTUR VON AUFGENOMMENEN UND STABILISIERTEN BILDERN

CORRECTION OF CAPTURED AND STABILIZED IMAGES

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **12.02.2008 FR 0850880**

(43) Date de publication de la demande:
**27.10.2010 Bulletin 2010/43**

(73) Titulaire: **Safran Electronics & Defense 92100 Boulogne-Billancourt (FR)**

(72) Inventeurs:
• **BROEKAERT, Michel**
  **F-75015 Paris (FR)**
• **BUDIN, Joel**
  **F-75015 Paris (FR)**

(74) Mandataire: **Cabinet Plasseraud 66, rue de la Chaussée d'Antin 75440 Paris Cedex 09 (FR)**

(56) Documents cités:
EP-A- 1 783 686      US-B1- 6 642 497
US-B1- 6 778 210

• PHAM T. Q., VAN VLIET L. J., SHUTTE K.: "Influence of Signal-to-Noice Ratio and Point Spread Function on Limits of Super-Resolution" SPIE AND IS&T, vol. 5672, 2005, XP002495298
• BEN-EZRA M., ZOMET A., NAYAR S. K.: "Jitter Camera: a Super-Resolution Video Camera" PROC. OF SPIE-IS&T ELECTRONIC IMAGING, vol. 6077, 2005, XP002495750
• IRANI M ET AL: "SUPER RESOLUTION FROM IMAGE SEQUENCES" PROCEEDINGS OF THE INTERNATIONAL CONFERENCE ON PATTERN RECOGNITION. ATLANTIC CITY, JUNE 16 - 21, 1990. CONFERENCE A : COMPUTER VISION AND CONFERENCE B : PATTERN RECOGNITION SYSTEMS AND APPLICATIONS; [PROCEEDINGS OF THE INTERNATIONAL CONFERENCE ON PAT, vol. 2, 16 juin 1990 (1990-06-16), pages 115-120, XP000166484 ISBN: 978-0-8186-2062-1
• MIN KYU PARK ET AL: "Super-resolution image reconstruction: a technical overview" IEEE SIGNAL PROCESSING MAGAZINE, IEEE SERVICE CENTER, PISCATAWAY, NJ, US, vol. 20, no. 3, 1 mai 2003 (2003-05-01), pages 21-36, XP011097476 ISSN: 1053-5888
• RAV-ACHA A ET AL: "Two motion-blurred images are better than one", PATTERN RECOGNITION LETTERS, ELSEVIER, AMSTERDAM, NL, vol. 26, no. 3, 1 February 2005 (2005-02-01), pages 311-317, XP027779891, ISSN: 0167-8655 [retrieved on 2005-02-01]

**Description**

La présente invention concerne un traitement d'images capturées par un dispositif de capture d'image, tel qu'une caméra ou des jumelles par exemple, et plus particulièrement, une correction d'un effet de 'bougé' sur les images captées, ou 'flou de bougé' ou encore 'filé'.

Sur des images captées par un dispositif de capture d'image, il est possible de déplorer des dégradations de la qualité d'image qui sont liées à des défauts du capteur d'image en lui-même, comme des défauts liés à une intégration de la lumière captée au niveau du capteur, ou encore des dégradations qui sont liées à des éléments extérieurs au capteur, comme par exemple un flou de bougé.

Un flou de bougé est une dégradation qui peut affecter une image captée lorsque l'axe de visée est en mouvement au moment de la capture de l'image. Cette dégradation peut se matérialiser sur l'image par un filé visible qui introduit une zone floue sur une scène captée. Le flou de bougé a donc en général pour origine un mouvement de l'axe de visée du capteur pendant la capture d'images.

Lorsqu'une caméra est portée par un support en mouvement, comme un homme en marche ou même à l'arrêt, ou encore un véhicule, les images capturées peuvent présenter un flou de bougé qui correspond à des effets visuels nuisibles à la qualité des images. L'image captée, qui est affectée du flou de bougé, peut être représentée par un produit de convolution entre une fonction d'étalement du point, ou PSF pour 'Point Spead Function', associée au flou de bougé et la scène d'origine O capturée au sein de l'image captée. Ainsi, pour corriger l'image captée affectée du flou de bougé, on connait des méthodes basées sur une déconvolution de l'image captée avec une fonction d'étalement de point qui est susceptible de représenter le flou de bougé qui a affecté l'image captée. Plus précisément, cette opération de déconvolution correspond au produit de convolution entre l'image captée et la fonction d'étalement de point associée au flou de bougé. On peut notamment prévoir de mettre en oeuvre une telle déconvolution par application d'un filtre (filtres de Wiener en base de Fourier, ou autres algorithmes dans d'autres bases, comme décrit dans le document 'A wavelet Tour of Signal Processing' de Stéphane Mallat.

Toutefois, afin d'appliquer de telles méthodes, il convient de déterminer une forme du flou de bougé ayant affecté l'image à corriger afin de pouvoir définir la fonction de point d'étalement qui lui est associée pour ensuite appliquer une opération de déconvolution sur la base de cette fonction associée.

La mise en oeuvre d'une telle étape peut requérir des calculs complexes. En outre, il convient de baser une telle étape de détermination de la fonction d'étalement du point associée à un flou de bougé sur des hypothèses préalables, qui peuvent par la suite s'avérer être plus ou moins pertinentes et de ce fait, conduire à une correction insatisfaisante de l'image captée.

Des systèmes de capture d'images sont adaptés pour réduire de tels effets visuels. En effet, certains de ces systèmes stabilisent la ligne de visée en intégrant un module mécanique de stabilisation inertielle dans la caméra ou encore en agençant la caméra sur un module mécanique tel qu'une plateforme qui permet une stabilisation inertielle. La mécanique de ces systèmes peut être commandée en fonction des informations émanant de gyroscopes. Ils permettent donc de stabiliser l'axe de visée d'une caméra dans un référentiel inertiel. Dans un tel contexte, il est alors possible de capter des images de manière complètement indépendante des mouvements irréguliers qui sont imposés au support de la caméra utilisée. Un tel système de prise de vue basé sur un référentiel inertiel permet d'éviter de manière efficace les effets visuels dus aux mouvements irréguliers du support de la caméra, c'est-à-dire le flou de bougé.

D'autres de ces systèmes de capture d'images peuvent intégrer un module de stabilisation numérique qui vise à stabiliser les images captées en appliquant un traitement numérique à ces dernières.

Toutefois, lorsque le flou de bougé est réduit par un contrôle inertiel du mouvement de l'axe de visée, on peut déplorer une perturbation dans les images captées qui correspond à un bruit spatial fixe.

On entend par les termes 'bruit spatial', un décalage indésirable (ou offset) entre les valeurs des pixels d'une même image qui devraient théoriquement être égales, c'est-à-dire dans le cas où les pixels correspondent au même signal d'entrée. Ce type de dégradation peut être lié à des caractéristiques intrinsèques au capteur considéré.

Une image numérique est représentée par une matrice de pixels, chacun correspondant à un niveau de couleur ou à un niveau de gris de l'image. Une image correspond à une scène captée par une matrice de détecteurs de flux, puis les énergies lumineuses reçues respectivement par ces détecteurs sont transformées en des signaux électriques respectifs. Les différents détecteurs de la matrice de détecteurs sont en général théoriquement identiques mais, en pratique, ils présentent des différences qui induisent des décalages indésirables, tels que définis ci-dessus, entre différents pixels d'une image captée d'une scène qui correspond à un flux d'entrée qui est identique en tout point de l'image captée, et de ce fait un bruit spatial dans cette image.

Il est possible de corriger un tel bruit spatial en capturant une image d'un corps noir et en calculant sur cette image les décalages indésirables entre les différents pixels respectivement captés par les détecteurs de flux de la matrice, afin de corriger ces décalages sur les prochaines images captées. Toutefois, ce type de correction requiert une interruption dans la capture d'images en cours.

Or, étant donné que les décalages entre les valeurs des pixels d'une même image, qui sont dus au bruit spatial, peuvent varier au cours du temps, notamment en fonction de la température, il peut être intéressant de réitérer une étape de correction de ces décalages régulièrement au cours de la capture d'images, sans avoir à interrompre l'opération de capture d'images.

Dans le contexte d'un système de capture d'images à stabilisation inertielle, le bruit spatial est une perturbation gênante, puisque les perturbations relatives au mouvement de l'axe de visée sont évitées. Il est donc d'autant plus intéressant dans un tel contexte de pouvoir corriger ce bruit spatial.

Il convient donc de noter, que, d'un côté, dans un système de capture d'image au sein duquel le mouvement de l'axe de visée n'est pas stabilisé de manière inertielle, les images captées peuvent être affectées de flou de bougé, et que, d'un autre côté, dans un système de capture d'image au sein duquel le mouvement de l'axe de visée est stabilisé de manière inertielle, les images captées sont affectées de perturbations relatives au bruit spatial.

La présente invention vise à remédier aux inconvénients précités.

Un premier aspect de la présente invention propose un procédé de traitement d'images dans un système de capture d'une série d'images d'une scène comprenant un dispositif de capture d'images ayant une matrice de détecteurs de flux orientée selon un axe de visée,

ledit dispositif de capture d'images comprenant un module de stabilisation qui stabilise l'axe de visée des images captées, ledit axe de visée étant animé d'un mouvement défini, cyclique et présentant sur un cycle, au niveau de la matrice des détecteurs de flux, une amplitude de n pixels, n étant un nombre entier supérieur à 2, et inférieur à $n_{max}$, $n_{max}$ étant déterminé de sorte que les images captées au cours d'un cycle présentent une partie majoritairement commune;

ledit procédé comprenant les étapes suivantes appliquer à une série d'images successives captées pendant un cycle :

/1/ répéter les étapes /i/ et /ii/ depuis la première image captée jusqu'à la dernière image captée de ladite série et obtenir une image intermédiaire :

- /i/ caler une image suivante de ladite série d'images sur une image précédente en fonction du mouvement défini ;
- /ii/ corriger un bruit spatial relatif aux détecteurs de flux et affectant la partie commune des images de ladite série d'images, en fonction d'au moins un décalage déterminé entre une valeur d'un pixel de référence dans la partie commune de l'image précédente et une valeur d'un pixel suivant qui représente un même point de ladite scène que ledit pixel de référence dans ladite partie commune de l'image suivante ;

/2/ obtenir une image captée corrigée de la scène en appliquant un produit de convolution entre ladite image intermédiaire et une fonction d'étalement de point, ladite fonction d'étalement de point étant déterminée sur la base du mouvement défini.

On entend ici par 'module de stabilisation' un module qui permet de stabiliser l'axe de visée des images captées soit de manière numérique soit de manière mécanique soit encore de manière combinée numérique et mécanique. Les termes 'axe de visée' d'une image captée correspondent au centre de cette image captée.

Lorsque le module de stabilisation stabilise l'axe de visée des images captées par traitement numérique d'images, il peut se fonder sur une fonction de choix de meilleure estimée d'image stabilisée.

Grâce à ces dispositions, et plus précisément grâce au mouvement, contrôlé animant l'axe de visée du dispositif de capture, on est en mesure de corriger de manière pertinente à la fois le bruit spatial affectant les images captées ainsi que le flou de bougé. Le mouvement du dispositif de capture d'images

En effet, le bruit spatial affectant les images captées peut être avantageusement corrigé sur la base du mouvement imposé à l'axe de visée, puisque ce mouvement permet à un même détecteur de la matrice de détecteurs d'être exposé à différents points de la scène captée au cours du cycle du mouvement considéré. Sur la base de ces différentes expositions, on peut corriger les offsets de chacun des détecteurs, tout en continuant de capter des images. Grâce au fait que l'axe de visée d'un dispositif de capture d'images est animé d'un mouvement défini, il est alors avantageusement possible de mettre en place une correction de décalage de valeurs de pixels, afin de corriger le bruit spatial, sur la base des images capturées qui se succèdent. Ainsi, il n'est pas requis, pour effectuer une telle correction, d'interrompre la capture d'images en cours.

En introduisant ainsi, une déstabilisation contrôlée des images capturées dans un système ayant un module de stabilisation d'images, on est alors avantageusement en mesure de déterminer un mouvement défini adapté au besoin de traitement d'images destiné à corriger le bruit spatial. Puis, en conséquence, on peut tirer partie de la connaissance de ce mouvement pour calculer des corrections du bruit spatial.

Le module de stabilisation est adapté pour stabiliser les images successivement captées soit de manière numérique, soit par des mécanismes du type gyroscopes inertiels contrôlant l'axe de visée initialement.

Par exemple, grâce à ce mouvement défini, il est alors possible d'appliquer de manière optimale un procédé de traitement d'images, tel que celui qui est appliqué dans un contexte de capture d'images par un système de capture d'images qui n'est pas stabilisé, et qui présente donc des mouvements irréguliers de l'axe de visée induits par le support de ce système, comme décrit dans le document FR 2 828 315. On peut ainsi corriger le bruit spatial, sans interrompre la capture d'images, tout en bénéficiant des avantages fournis par un système de capture d'images à stabilisation soit inertielle soit encore numérique.

Un tel mouvement de l'axe de visée du capteur introduit un flou de bougé dans les images captées. Ce flou de bougé peut être de manière pertinente corrigé dans les images captées selon un mode de réalisation de la présente invention.

Il convient de noter qu'un tel traitement d'images peut avantageusement être adapté même lorsque l'intégration des détecteurs de flux est quasiment permanente, comme c'est le cas pour les détecteurs infra-rouge non refroidis (par exemple ceux de la famille des bolomètres). En effet, ici, contrairement à certains traitements de l'art antérieur, il est prévu d'appliquer un mouvement soit à vitesse constante soit à accélération constante, quelles que soient les périodes d'intégration des détecteurs. Il est d'autant plus avantageux d'appliquer un mouvement à l'axe de visée quelles que soient les périodes d'intégration des détecteurs, puisque ces périodes d'intégration peuvent varier en fonction des conditions extérieures, notamment climatiques. Ce mouvement peut donc être concomitant avec les périodes d'intégration.

Le mouvement défini peut être effectué à vitesse constante ou à accélération constante.

Dans un mode de réalisation de la présente invention, le flou de bougé peut être corrigé sur une série d'images captées correspondant au moins à celles captées durant la période pendant laquelle l'axe de visée décrit le cycle complet du mouvement qui lui est imposé. Cette série d'images est notée $N_i$ pour i compris entre 1 et K. Une fonction d'étalement du point PSF correspond au flou de bougé accumulé sur cette série d'images captées.

On entend par 'partie majoritairement commune', une même partie qui se retrouve dans plusieurs images et qui occupe dans ces images une partie majoritaire.

Ce mouvement défini est un mouvement cyclique, c'est-à-dire qu'il implique que l'axe de visée est périodiquement orienté selon la même orientation. Ainsi, on est en mesure d'appliquer une correction du bruit spatial qui converge.

Puis, ce mouvement défini présente une amplitude comprise entre un nombre n supérieur à 2, de sorte à permettre de parcourir les pixels voisins autour d'un pixel pour lequel on cherche à corriger la valeur. En outre, cette amplitude du mouvement défini reste inférieure à un nombre maximum qui doit permettre de retrouver dans une série d'images successives captées au cours d'un cycle du mouvement une partie majoritairement commune afin notamment de pouvoir appliquer une correction sur une grande étendue des images.

Dans un mode de réalisation de la présente invention, la fonction d'étalement de point de correction vérifie l'équation suivante :

$$PSF_{globale}(x, y, N_{1-k}) = PSF_{capt}(x, y) \otimes \sum_{i=1}^{k} PSF_{motion}(x, y, N_i) + \sum_{i=1}^{k} B(x, y, N_i)$$

où $PSF_{global}$ est la fonction d'étalement de point de correction ;

où x et y sont des coordonnées d'un détecteur au sein de la matrice de détecteurs ;

où $N_{1-k}$ est la série d'images captées, chaque image captée étant représentée par un indice $N_i$ pour i compris entre 1 et k, k étant supérieur à 1 ;

où $PSF_{capt}$ est une fonction d'étalement de point relative au capteur au niveau du détecteur de coordonnées x et y dans la matrice ;

où $PSF_{motion}$ est une fonction d'étalement de point relative au mouvement défini de l'axe de visée ; et

où $B(x,y,N_i)$ représente la somme des bruits temporels et spatiaux affectant une image captée d'indice $N_i$ et vérifie l'équation suivante :

$$B(x, y, N_i) = Btemp(x, y, N_i) + Bsf(x, y) + Bech(x, y, N_i)$$

où $Btemp(x,y,N_i)$ représente le bruit temporel de photon ou d'électron

où $Bsf(x,y)$ représente le bruit spatial fixe ou lentement variable

où $Bech(x,y,N_i)$ représente le bruit spatial d'échantillonnage.

Cette fonction d'étalement de point de correction est adaptée pour corriger le flou de bougé introduit par le mouvement défini.

En appliquant un produit de convolution entre la fonction d'étalement de point de correction et l'image intermédiaire, on obtient aisément une image captée de la scène considérée qui est corrigée à la fois du bruit spatial et du flou de bougé qui est introduit par le mouvement défini. Les bruits temporels et d'échantillonnage diminuent avec le nombre k d'images sommées et rendent la déconvolution plus facile.

Le module de stabilisation peut être adapté pour stabiliser les images captées sur la base d'un traitement numérique des images.

Alternativement, on peut prévoir que le module de stabilisation peut correspondre à un module de stabilisation inertielle mécanique.

Un tel mouvement défini peut par exemple correspondre à un cercle présentant un diamètre d'une valeur supérieure ou égale à 3 pixels au niveau de la matrice de détecteurs de flux.

Avantageusement, puisque le mouvement imposé à l'axe de visée est contrôlé, on peut prévoir de déterminer sa vitesse en fonction de la valeur du temps d'intégration des détecteurs de flux de la matrice des détecteurs du dispositif de capture d'images.

On peut également par exemple prévoir que le mouvement défini correspond à une rosace qui décrit plusieurs arcs de cercle ayant des rayons et des centres divers.

Dans un mode de réalisation de la présente invention, on corrige successivement, à partir du décalage déterminé, des valeurs de pixels de la partie commune de l'image précédente et de l'image suivante, en parcourant une chaîne de pixels comprenant, à partir du pixel de référence dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

Ainsi, il peut être avantageux de déterminer la position du pixel de référence dans la partie commune en fonction du mouvement défini et d'une période de temps écoulée entre les images capturées. En effet, en fonction de la position du pixel de référence choisi, et du mouvement défini en découle un sens de parcours des images par la chaîne de pixels de correction. Il est donc avantageux de choisir un pixel qui permette d'obtenir une longue chaîne de pixels.

Dans un mode de réalisation de la présente invention, puisque le mouvement qui anime l'axe de visée est défini, on peut prévoir de corriger le bruit spatial par application d'un mouvement inverse au mouvement défini aux images successivement capturées, de façon à contrebalancer le mouvement de l'axe de visée et ainsi permettre de recaler les images correctement. La position du pixel suivant dans l'image suivante peut alors être déterminée à partir de la position du pixel de référence dans l'image précédente en fonction des caractéristiques du mouvement défini appliqué à l'axe de visée et d'une période de temps écoulée entre des images successives. Puis, on peut procéder ainsi tout au long de la chaîne de pixels de correction.

Toutefois, même dans le cas où le mouvement imposé à l'axe de visée est théoriquement connu avec une grande précision, il est possible que ce mouvement soit entaché de bruit en pratique. Dans un tel cas, il peut alors être intéressant de mettre en place un procédé de traitement d'images numériques permettant de déterminer exactement le mouvement des mêmes points de la scène d'une image précédente à une image suivante.

A cet effet, il peut être avantageux de mettre en place un traitement numérique visant à déterminer le mouvement de l'axe de visée entre deux images consécutives, tel que celui qui est décrit dans le document FR 2 828 315, ou encore dans le document US 5 502 482. L'application d'un tel traitement permet avantageusement d'obtenir de très bonnes performances quant à la correction du bruit spatial.

Ainsi, dans un autre mode de réalisation de la présente invention, la mesure du mouvement défini est réalisée par application d'un traitement numérique des images précédente et suivante.

Dans le contexte de la présente invention, contrairement à ce qui est décrit dans les documents ci-dessus cités, le mouvement de l'axe de visée est contrôlé et connu. Il en résulte une meilleure qualité d'image que ce qui peut être obtenu dans un système qui ne bénéficie pas de stabilisation.

Ici, on est en mesure de déterminer un mouvement qui permet à la fois de corriger le bruit spatial et de limiter les effets visuels qui peuvent notamment découler de mouvements de l'axe de visée trop rapide par rapport au temps d'intégration des détecteurs, comme des effets de filé par exemple, c'est-à-dire une dégradation traduite par une fonction d'étalement de points (ou encore PSF pour 'Point Spread Function'). En effet, le mouvement qui est imposé à l'axe de visée peut avantageusement être défini en fonction du temps d'intégration des détecteurs utilisés.

Grâce au contrôle de ce mouvement de l'axe de visée, il est possible d'éviter d'introduire une déstabilisation à haute fréquence des images capturées, contrairement à ce qui peut être le cas dans un système de capture d'images à stabilisation numérique comme celui qui est décrit dans le document FR 2 828 315.

Un procédé selon un mode de réalisation de la présente invention peut être notamment très avantageux dans le cas où aucun mouvement n'anime le support de la caméra capturant la série d'images considérée, et où la scène capturée est une scène statique. En effet, dans ce cas là, le mouvement défini appliqué à l'axe de visée permet d'obtenir une bonne qualité des images traitées selon un mode de réalisation de la présente invention.

Un deuxième aspect de la présente invention propose un système de capture d'une série d'images adapté pour la mise en oeuvre d'un procédé de traitement d'images selon le premier aspect de la présente invention.

Un troisième aspect de la présente invention propose un programme d'ordinateur destiné à être installé dans un système de capture selon le deuxième aspect de la présente invention, comprenant des instructions aptes à mettre en oeuvre le procédé selon le premier aspect de la présente invention, lors d'une exécution du programme par des moyens de traitement du système de capture.

L'invention sera également mieux comprise à l'aide des dessins, sur lesquels :

- la figure 1 illustre un système de capture d'images selon un mode de réalisation de la présente invention ;
- la figure 2 illustre les principales étapes du procédé selon un mode de réalisation de la présente invention ;
- la figure 3 illustre un mouvement défini de l'axe de visée relativement à la matrice de détecteurs de flux du dispositif de capture d'images selon un mode de réalisation de la présente invention; et
- la figure 4 illustre une correction de bruit spatial appliquée à une image précédente et une image suivante de la série d'images captées selon un mode de réalisation de la présente invention.

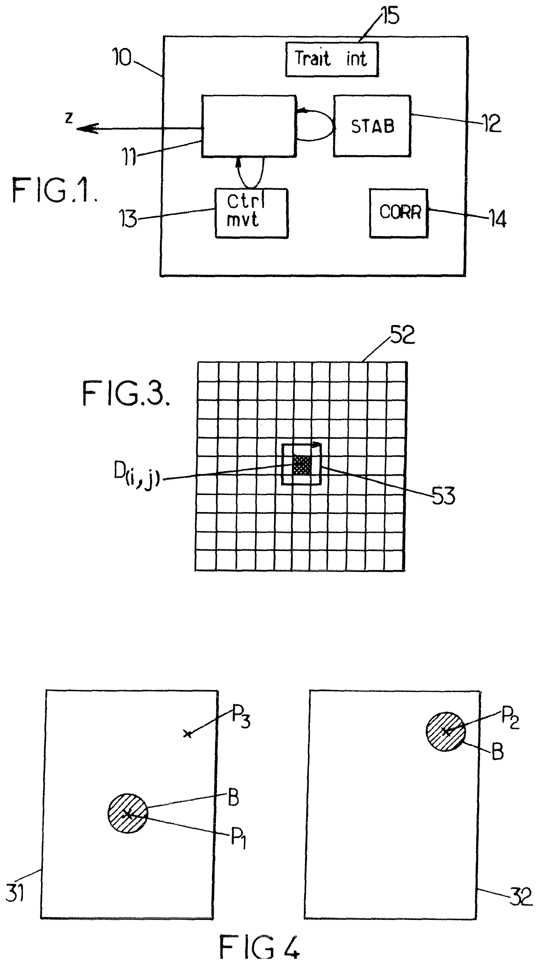

La figure 1 illustre un système de capture d'images selon un mode de réalisation de la présente invention. Un tel système 10 comprend donc un dispositif de capture d'images 11 ayant une matrice de détecteurs de flux orientée selon un axe de visée z. Cet axe de visée a une orientation qui est contrôlée par un module de stabilisation 12. Ce module de stabilisation 12 peut être un module de stabilisation mécanique inertielle ou encore un module de stabilisation par traitement numérique des images captées. La présente invention couvre tout type de module de stabilisation d'images et aucune limitation ne lui est attachée.

Dans un mode de réalisation, on peut prévoir qu'un tel module de stabilisation correspond à des gyroscopes inertiels, bien connus de l'homme du métier. Par la suite, la présente invention est décrite dans con application à un module de stabilisation inertielle, sans toutefois limitée aucunement l'application de cette invention à d'autres types de modules de stabilisation.

Ici, malgré les mouvements qui peuvent animer le support du système de capture d'images, les gyroscopes imposent à l'axe de visée une orientation qui est indépendante des vibrations angulaires et linéaires qui animent le support et qui, de ce fait, permet de bénéficier d'une stabilisation mécanique inertielle et de tous les avantages, bien connus de l'homme du métier, qui en découlent.

La présente invention couvre tout type de support sur lequel peut être posé un tel système de capture d'images. Ce support peut être notamment un homme, ou encore tout type de véhicule aérien, terrestre ou marin.

Le support de ce système de capture 10 peut être en mouvement selon une trajectoire quelconque, ou encore être stationnaire. Lorsque le support est en mouvement, un mode de réalisation de la présente invention peut être appliqué dans le cas où l'orientation de l'axe de visée est maintenue de telle sorte que, malgré le mouvement du support, la même scène est capturée au fil du temps.

Ce système de capture d'images à stabilisation inertielle comprend en outre un module de contrôle de mouvement 13 qui est adapté pour appliquer à l'axe de visée un mouvement défini. La présente invention couvre tout type de module de contrôle de mouvement qui peut appliquer un mouvement défini à l'axe de visée du dispositif de capture d'images. Ce module de contrôle de mouvement 13 peut par exemple correspondre à un mécanisme opto mécanique bien connu de l'homme du métier.

Dans un mode de réalisation de la présente invention, le mouvement défini qu'impose le module de contrôle de mouvement 13 à l'axe de visée z est un mouvement cyclique. Ainsi, l'axe de visée reprend périodiquement les mêmes orientations relatives au support sur lequel est positionné le système de capture d'images 10.

On appelle produit de convolution entre une fonction f et une fonction g, noté $\otimes$, un produit tel que défini par l'équation suivante :

$$(f \otimes g)(x) = \int_{-\infty}^{\infty} f(x-t).g((t).dt = \int_{-\infty}^{\infty} f(t).g(x-t).dt$$

Un tel produit de convolution correspond à une multiplication dans l'espace de Fourier.

Une image capturée $I_{capt}$, au niveau d'un détecteur ayant des coordonnées x et y dans la matrice des détecteurs considérées, peut vérifier l'équation suivante, lorsque l'axe de visée n'est pas en mouvement, c'est-à-dire lorsque l'image captée n'est pas affectée de flou de bougé :

$$I_{capt}(x, y) = PSF_{capt}(x, y) \otimes O(x, y) + B(x, y) \qquad (1)$$

où $I_{capt}$ représente l'image captée par le capteur au niveau du détecteur (x,y) ;
où $PSF_{capt}(x,y)$ est la fonction d'étalement de point représentant un flou sans mouvement, c'est-à-dire un flou qui n'est pas un flou de bougé, et qui est attaché au détecteur (x, y) du capteur ;

où O(x,y) correspond à la scène réelle captée par le capteur au niveau du détecteur (x,y), c'est-à-dire à l'image captée par le capteur (x,y) sans aucun flou ni aucun autre bruit lié à la capture ; et

où B(x,y) représente la somme des bruits temporels et spatiaux affectant l'image captée $I_{capt}(x,y)$.

Lorsque l'axe de visée du capteur est animé d'un mouvement selon un mode de réalisation de la présente invention, une image N captée, notée I(x, y, N) vérifie l'équation suivante :

$$I(x, y, N) = PSF_{capt}(x, y) \otimes PSF_{motion}(x, y, N) \otimes O(x, y) + B(x, y) \quad (2)$$

où $PSF_{capt}(x,y)$ est une fonction d'étalement du point liée au flou introduit dans l'image captée au niveau du détecteur x,y ;

où $PSF_{motion}(x, y, N)$ est une fonction d'étalement du point liée au mouvement de l'axe de visée ; et

où B(x,y) vérifie l'équation suivante :

$$B(x, y) = \sum_{i=1}^{k} B(x, y, N_i)$$

où $B(x,y,N_i)$ est la somme des bruits temporels et spatiaux affectant une image captée d'indice $N_i$.

L'équation suivante peut être vérifiée :

$$B(x, y, N_i) = Btemp(x, y, N_i) + Bsf(x, y) + Bech(x, y, N_i)$$

où $Btemp(x,y,N_i)$ représente le bruit temporel de photon ou d'électron ;

où Bsf(x,y) représente le bruit spatial fixe ou lentement variable ;

où $Bech(x,y,N_i)$ représente le bruit spatial d'échantillonnage.

Dans un mode de réalisation de la présente invention, on prévoit de capter une série d'images respectivement représentées par les indices $N_1$ à $N_k$, k étant un entier supérieur à 1, ces k images étant captées pendant que l'axe de visée du capteur décrit un cycle complet du mouvement défini.

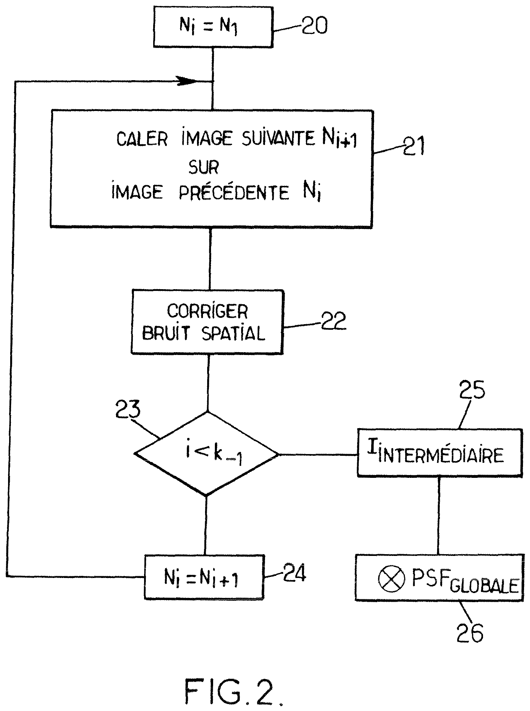

La figure 2 illustre les principales étapes d'un procédé de traitement selon un mode de réalisation de la présente invention.

A une étape 20, on initialise une variable $N_i$ à la valeur $N_1$ correspondant à la première image de la série d'images captées au cours d'un cycle selon un mode de réalisation de la présente invention.

Ensuite à une étape 21, on cale l'image suivant cette image $N_1$, c'est à l'image $N_2$ sur l'image $N_1$, sur la base du mouvement défini imposé à l'axe de visée du capteur. A chaque nouvelle image captée, $N_i$ dans la série d'images considérée, on procède donc à un calage d'image sur la précédente, ou encore une stabilisation successive de deux images l'une par rapport à l'autre. Cette étape de stabilisation vise à recaler deux images successivement captées, ces deux images captées successives ayant été décalées sur la base du mouvement de l'axe de visée.

A une étape 22, on corrige alors un bruit spatial que l'on peut détecter relativement à ces deux images $N_1$ et $N_2$.

On vérifie à une étape 23, si l'indice i de l'image courante $N_i$, c'est-à-dire de l'image en cours de traitement, est inférieur à l'entier k-1, c'est-à-dire que l'image $N_i$ ne correspond par à l'avant dernière image de la série d'images captées $N_{1-k}$. Dans ce cas, on passe à l'image courante en incrémentant par un l'indice i, à une étape 23.

On répète les étapes 21 et 22 sur l'image courante suivante. Pour toutes les images courantes de la série d'images $N_{1-k}$, à l'exception de la dernière image $N_k$.

Puis, à l'issue de ces répétitions d'étapes 21 et 22, on obtient une image intermédiaire $I_{intermédiaire}$ à une étape 25.

Cette image intermédiaire correspond à une image obtenue à partir des images de la série $N_{1-k}$, par accumulation de ces dernières et par correction du bruit spatial fixe affectant cette série d'images.

Enfin, à cette image intermédiaire $I_{intermédiaire}$ on applique par un produit de convolution une fonction d'étalement de point de correction $PSF_{global}$, à une étape 26.

L'obtention de cette fonction d'étalement de point de correction $PSF_{global}$ est décrite dans des sections suivantes selon un mode de réalisation de la présente invention.

A titre illustratif, on peut par exemple prévoir que le mouvement de l'axe de visée correspond au parcours d'un cercle à une vitesse constante. A un tel mouvement correspond une fonction de filé ayant une forme de rectangle de longueur L vérifiant l'équation suivante :

$$L = R.\omega.T_{intégration}$$

où R est le rayon du cercle décrit par l'axe de visée lors du mouvement contrôlé ;
où $\omega$ est un angle représentant l'orientation de l'axe de visée dans un repère de coordonnées polaires ;
$T_{intégration}$ est le temps d'intégration du capteur, c'est-à-dire le temps d'ouverture des détecteurs de la matrice du capteur.

Le rectangle représentant la fonction de filé a alors une hauteur 1/L, la fonction de filé représentant le déplacement d'un point de l'image pendant le temps d'intégration.

Il convient de noter que l'on peut également prévoir que le mouvement défini soit effectué au niveau de l'axe de visée non pas à vitesse constante mais à accélération constante. Dans ces conditions, la fonction de filé correspond à une vitesse en forme de trapèze.

En prenant en considération toutes les orientations $\omega$, le flou de bougé peut alors être considéré comme un cylindre de surface S et de hauteur 1/S. L'application d'un tel flou de bougé à l'image captée peut être équivalente à l'application d'une défocalisation de rayon L.

L'équation suivante est alors vérifiée :

$$PSF_{global}(x, y, N_{1-k}) = PSF_{capt}(x, y) \otimes Cycl(S, h) + B(x, y)$$

où x et y sont les coordonnées de pixels dans une image captée par le détecteur (x, y) de la matrice des détecteurs ;
où $PSF_{global}$ est la fonction d'étalement de point de correction représentant le flou de bougé attaché à la séquence d'images $N_{1-k}$ captée pendant la période du cycle du mouvement de l'axe de visée ;
où $PSF_{capt}(x,y)$ est la fonction d'étalement de point représentant le flou de bougé attaché au capteur (x, y) ;
où B(x,y) vérifie l'équation suivante :

$$B(x, y) = \sum_{i=1}^{k} B(x, y, N_i)$$

où $B(x,y,N_i)$ est la somme des bruits temporels et spatiaux affectant une image captée d'indice $N_i$.

L'équation suivante peut donc être vérifiée :

$$B(x, y, N_i) = Btemp(x, y, N_i) + Bsf(x, y) + Bech(x, y, N_i)$$

où $Btemp(x,y,N_i)$ représente le bruit temporel de photon ou d'électron ;
où $Bsf(x,y)$ représente le bruit spatial fixe ou lentement variable ;
où $Bech(x,y,N_i)$ représente le bruit spatial d'échantillonnage.
où Cycl(S, h) représente le flou de bougé pour un mouvement décrivant un cylindre, S et h vérifiant respectivement les équations suivantes :

$$S = \pi.L^2 \; ;$$

$$h = 1/S.$$

A titre illustratif également, on considère par la suite que la vitesse V du mouvement défini est constante, et a une composante $V_x$ sur l'axe X et une composante $V_y$ sur l'axe Y, X et Y étant les axes de coordonnées considérés dans la matrice de détecteurs du capteur.

Dans le contexte d'une vitesse constante du mouvement de l'axe de visée, l'étape 21 selon un mode de réalisation de la présente invention est mise en oeuvre sur la base de l'équation suivante :

$$I_{stab}(x, y, N_i) = I(x, y, N_i) + I(x - V_x, y - V_y, N_{i-1})$$

où $I_{stab}$ est une image stabilisée, image calée, correspondant à l'image captée $N_i$, au niveau du détecteur (x,y), à partir des deux images captées successives $N_i$ et $N_{i-1}$ dans la série d'images $N_{1-k}$;

où $I(x,y,N_i)$ représente l'image captée au niveau du détecteur (x,y) à la capture $N_i$ de la série de captures $N_{1+k}$.

Sur la base de cette équation, on est en mesure de stabiliser chaque image de la série d'images considérée, l'une par rapport à l'autre successivement.

Lorsque la vitesse V est sensiblement constante, on prévoit de décrire le flou de bougé introduit dans la série d'images captées $N_1$ à $N_k$, c'est-à-dire pendant un cycle de mouvement défini de l'axe de visée, par une fonction cylindre de surface $S=P.L^2$ et de hauteur 1/S, L correspondant à la longueur du vecteur suivant :

$$\frac{T_{int}}{T_i}.(V_x, V_y)$$

où $T_{int}$ correspondant au temps d'intégration du détecteur de flux (x,y); et

où Ti est la période de temps qui s'écoule entre deux captures successives d'images $N_i$ à $N_{i+1}$.

Dans un mode de réalisation de la présente invention, la fonction d'étalement de point correspondant au flou de bougé introduit par un cycle de mouvement défini dans une série d'images captées, peut alors s'écrire sous la forme :

$$PSF_{globale}(x, y, N) = \frac{T_{int}}{T_i}.rect(V_x, V_y))$$

où Ti représente le temps qui s'écoule entre la capture de deux images consécutives ;

où rect(x,y) est une fonction rectangle de longueur x et de hauteur y à énergie constante.

A l'étape 25, dans le cas où la vitesse du mouvement défini est constante, on obtient une image intermédiaire $I_{intermédiaire}$ qui peut vérifier l'équation suivante :

$$I_{int\,ermédiaire}(x, y, N_{1-k}) = I(x, y, N_k) + \sum_{i=1}^{k} I(x - V_x, y - V_y, N_{i-1}) \qquad (3)$$

où $N_{1-k}$ représente la série de k images captées selon un mode de réalisation de la présente invention.

A partir des équations (2) et (3), on déduit l'équation (4) suivante :

$$I_{intermédiaire}(x,y,N_{1-k}) = \sum_{i=1}^{k} PSF_{capt}(x,y) \otimes PSF_{motion}(x,y,N_i) \otimes O(x,y) + B(x,y)$$

$$I \qquad (x, y, N \quad) = PSF \quad (x, y) \otimes PSF \qquad (x, y, N) \otimes O(x, y) + B(x, y)$$

où B(x,y) représente la somme des bruits temporel et spatiaux affectant les images d'indice $N_i$.

L'équation (4) peut encore s'écrire comme suit selon l'équation (5) :

$$I_{intermédiaire}(x, y, N_{1-k}) = O(x, y) \otimes PSF_{capt}(x, y) \otimes PSF_{globale}(x, y, N_k) + B(x, y) \qquad (5)$$

A ce stade, à partir de l'équation (5) ci-dessus, on détermine avantageusement une fonction d'étalement de point de correction sur la base de laquelle on est en mesure d'obtenir une image captée dans laquelle plusieurs types de dégradations sont corrigés de manière aisée.

Cette fonction de correction de correction PSF$_{global}$ vérifie l'équation suivante selon un mode de réalisation de la présente invention :

$$PSF_{globale}(x, y, N_{1-k}) = PSF_{capt}(x, y) \otimes \sum_{i=1}^{k} PSF_{motion}(x, y, N_i) + B(x, y) \qquad (6)$$

Sur la base d'une telle fonction globale de correction PSF$_{global}$, on est donc en mesure de corriger des dégradations des deux types affectant une série d'images captées. En effet, en mettant en oeuvre un produit de déconvolution entre une image intermédiaire obtenue selon un mode de réalisation de la présente invention, sur la base de la série d'images captées, et la fonction d'étalement de point de correction PSF$_{global}$ selon un mode de réalisation de la présente invention, on peut obtenir une image corrigée des dégradations introduites dans la série d'images captées dues au bruit spatial et au flou de bougé.

Le bruit temporel est également réduit dans un rapport de racine de k, où k est le nombre d'images de la série d'images N$_{1-k}$. Cette réduction du bruit temporel permet d'améliorer le résultat obtenu après déconvolution.

En procédant ainsi, on est en mesure de restaurer une série d'images non pas en prenant en considération chacune de ces images une par une individuellement, mais de manière globale, ce qui permet d'accroitre l'efficacité d'une telle correction.

En outre, la fonction d'étalement de point de correction, peut avantageusement être déterminée, non pas sur la base de suppositions relatives au mouvement qui a pu animer l'axe de visée pendant la capture des images, mais sur la base du mouvement réel qui anime cet axe de visée.

En outre, en contrôlant ainsi le mouvement de l'axe de visée dans un système de capture tel que celui décrit ci-avant, on peut définir un mouvement qui permette de réduire le flou de bougé et qui permette une détermination aisée de la fonction d'étalement de point associée PSF$_{motion}$.

La figure 3 illustre une matrice 52 de détecteurs de flux D(i,j) d'un dispositif de capture d'images dans un système de capture d'images selon un mode de réalisation de la présente invention, où i représente l'indice de lignes de la matrice et j l'indice de colonne de la matrice.

Le mouvement défini appliqué par le module de contrôle de mouvement 13 permet avantageusement à différents détecteurs D(i,j) de la matrice de détecteurs 52, de capter un même point d'une scène capturée par le système de capture d'images.

Ce mouvement défini présente, de préférence, au niveau de la matrice des détecteurs de flux 52, une amplitude de n pixels, n étant un nombre entier supérieur à 2, et inférieur à n$_{max}$, n$_{max}$ étant déterminé de sorte que les images captées au cours d'un cycle présentent une partie majoritairement commune.

Un tel système de capture d'images 10 comprend en outre un module de traitement intermédiaire 15 adapté pour fournir une image intermédiaire à partir de la série d'images, captées pendant un cycle du mouvement défini, sur la base d'une répétition des opérations suivantes :

- caler une image suivante N$_{i+1}$ de la dite série d'images sur une image précédente N$_i$ en fonction du mouvement défini ; et
- corriger un bruit spatial relatifs auxdits détecteurs de flux et affectant la partie commune des images précédente et suivante, sur la base dudit mouvement défini, en fonction d'au moins un décalage déterminé entre une valeur d'un pixel de référence P$_1$ dans la partie commune d'une image précédente et une valeur d'un pixel suivant P$_2$ qui représente un même point de ladite scène que ledit pixel de référence dans ladite partie commune d'une image suivante.

Il comprend également un module de correction 14 adapté pour fournir une image captée corrigée de la scène en appliquant un produit de convolution entre l'image intermédiaire et une fonction d'étalement de point de correction PSF$_{global}$, cette fonction d'étalement de point de correction étant déterminée sur la base du mouvement défini.

Le module de contrôle de mouvement 13 peut être adapté pour appliquer un mouvement défini correspondant à un cercle présentant un diamètre d'une valeur supérieure ou égale à 3 pixels au niveau de la matrice de détecteurs de flux.

Le module de contrôle de mouvement 13 peut être adapté pour appliquer un mouvement défini présentant une vitesse qui est déterminée en fonction d'un temps d'intégration des détecteurs de flux du dispositif de capture d'images.

Le module de correction peut être adapté pour corriger successivement, à partir du décalage déterminé, des valeurs de pixels de la partie commune de l'image précédente 31 et de l'image suivante 32, telles qu'illustrées en figure 4, en parcourant une chaîne de pixels comprenant, à partir du pixel de référence P$_1$ dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

Le module de correction peut alors en outre être adapté pour déterminer la position du pixel de référence $P_1$ dans la partie commune en fonction du mouvement défini et d'une période de temps écoulée entre les deux images.

Le module de correction peut être adapté pour déterminer la position du pixel suivant $P_2$ dans l'image suivante 32 à partir de la position du pixel de référence $P_1$ dans l'image précédente en fonction d'informations relatives au mouvement défini qui sont fournies par le module de contrôle de mouvement et d'une période de temps écoulée entre les images précédente et suivante.

Le module de correction 14 peut être adapté pour déterminer le mouvement défini par application d'un traitement numérique des images précédente et successive, tel que celui qui est décrit par exemple dans le document FR 2 828 315.

La figure 3 illustre un mouvement défini 53 selon un mode de réalisation de la présente invention relativement à la matrice de détecteurs de flux du dispositif de capture d'images. Ce mouvement défini impose à l'axe de visée, au niveau de la matrice de détecteurs, un déplacement le long d'un carré de pixels ayant des côtés d'une longueur de 3 pixels.

Dans ces conditions, lorsque le mouvement a en outre une vitesse qui permet un déplacement d'un pixel entre deux images consécutivement captées, 8 détecteurs différents de la matrice 52 captent le même point de la scène captée en un cycle du mouvement défini, c'est à dire les pixels positionnés le long de la circonférence du carré illustré en figure 2.

On peut également prévoir d'appliquer un mouvement défini présentant une amplitude supérieure à 3 pixels.

On peut aussi prévoir, qu'au lieu de décrire un carré, au niveau de la matrice des détecteurs 52, l'axe de visée z décrit un cercle de diamètre supérieur ou égal à 3 pixels.

De manière générale, d'une part, on impose à l'axe de visée au niveau de la matrice de détecteurs, une amplitude de mouvement minimale de manière à s'assurer que la correction du bruit spatial est pertinente, car elle est alors réalisée sur un échantillon représentatif de détecteurs de la matrice de détecteurs. Puis, d'autre part, on impose le fait que cette amplitude de mouvement soit inférieure à une valeur maximale qui est déterminée de manière à s'assurer qu'une importante partie commune de la scène captée soit présente sur toutes les images qui sont captées pendant un cycle du mouvement défini appliqué à l'axe de visée.

La figure 4 illustre une correction de bruit spatial appliquée à une image précédente et une image suivante de la série d'images captées.

Deux images successives, une image précédente 31 et une image suivante 32, sont captées selon un mode de réalisation de la présente invention. Un ballon B est représenté au centre de l'image précédente 31, puis, il est représenté dans l'angle droit sur l'image suivante 32, puisque l'axe de visée a été déplacé entre les moments respectifs de capture des deux images successives 31 et 32, selon le mouvement défini imposé par le module de contrôle de mouvement 13.

Les pixels au sein d'une image captée sont référencés dans le référentiel de la matrice de détecteurs 52, qui comprend les détecteurs D(i,j) pour i compris entre 1 et le nombre total de lignes de la matrice 52 et pour j compris entre 1 et le nombre total de colonnes de la matrice 52.

Le détecteur central D(x,y) de la matrice des détecteurs capte un point central du ballon B pour l'image précédente 31. Puis, l'axe de visée z ayant été orienté différemment pour la capture de l'image suivante 32, le point central du ballon B est ensuite capté par un autre détecteur D(x',y') de la matrice des détecteurs.

Théoriquement, les pixels représentant le point central du ballon B respectivement dans l'image précédente 31 et dans l'image suivante 32, devraient être positionnés à la même valeur.

Si tel n'est pas le cas en pratique, il convient d'y remédier.

A cet effet, dans un mode de réalisation de la présente invention, en premier lieu est déterminé le mouvement que tous les détecteurs de la matrice de détecteurs ont subi entre le moment de capture de l'image précédente 31 et celui de l'image suivante 32.

Etant donné que ce mouvement correspond au mouvement défini contrôlé par le module de contrôle de mouvement 13, au sein du système de capture d'images 10, on connaît ce mouvement, c'est-à-dire sa forme, ainsi que sa vitesse.

Par conséquent, il est aisé de déterminer pour un pixel de référence $P_1$ de l'image précédente 31, un pixel suivant correspondant dans l'image suivante 32, c'est-à-dire un pixel qui représente le même point de la scène captée dans l'image suivante 32.

Puis, on calcule un décalage entre la valeur $V(P_1)$ du pixel de référence et la valeur $V(P_2)$ du pixel suivant, et on obtient un décalage qui vérifie l'équation :

$$\delta = V(P_2) - V(P_1)$$

Ce décalage $\delta$ est ensuite utilisé pour corriger la valeur d'un pixel $P_1$ de l'image précédente, qui a été capté par le détecteur D(x,y), en fonction de la valeur du pixel $P_2$. On obtient donc une valeur corrigée $V_{cor}$ du pixel $P_1$ qui vérifie l'équation suivante :

$$V_{cor}(P_1) = V(P_1) + \delta$$

On peut appliquer une telle méthode de correction du bruit spatial sur tous les pixels qui correspondent à la même scène dans les deux images considérées.

Dans un mode de réalisation de la présente invention, on prévoit d'appliquer une propagation de la correction de décalage de la façon suivante. Le décalage $\delta$ tel que déterminé ci-dessus, permet également de corriger la valeur d'un troisième pixel $P_3$ dans l'image précédente 31 correspondant au détecteur D(x',y'). En effet, cette valeur est entachée du même décalage $\delta$ et peut donc être corrigée pour fournir une valeur corrigée $V_{corr}(P_3)$ qui vérifie l'équation suivante :

$$V_{corr}(P_3) = V(P_3) + \delta$$

Puis, à partir de cette valeur de pixel corrigée, on est en mesure de corriger un quatrième pixel $P_4$ qui a été capté par un détecteur D(x'', y''), qui a capté le même point de la scène que le détecteur D(x',y') pour l'image précédente. En effet, la valeur corrigée de ce pixel $P_4$ vérifie l'équation suivante :

$$V_{corr}(P_4) = V_{corr}(P_3).$$

Puis, on reporte le décalage $\delta$ sur la valeur du pixel de l'image 31 qui a été captée par le détecteur D(x'', y'') de la matrice de détecteurs 52. On peut ainsi parcourir une chaîne de pixels que l'on peut corriger successivement et alternativement entre l'image précédente 31 et l'image suivante 32.

En procédant ainsi, on corrige successivement des valeurs de pixels de la partie commune de l'image précédente 31 et de l'image suivante 32, en parcourant une chaîne de pixels comprenant successivement, à partir d'un pixel de référence dans l'image précédente, des pixels qui se correspondent alternativement dans les images suivante et précédente. Dans une telle chaîne de pixels, un pixel de l'image suivante correspond à un pixel de l'image précédente lorsqu'il représente un même point de la scène captée ; et, un pixel de l'image suivante correspond à un pixel de l'image précédente, lorsque ces deux pixels correspondent au même détecteur de flux dans la matrice de détecteurs 52.

Dans les sections ci-avant, le mouvement d'un pixel depuis une image précédente à une image suivante est déterminé à partir de la connaissance que le système de capture d'images 10 a de ce mouvement mécanique.

Il se peut que cette connaissance du mouvement défini soit insuffisamment précise. Tel est notamment le cas lorsque ce mouvement défini est en pratique entaché de bruit.

Dans un tel cas, le mouvement défini qui est théoriquement appliqué à l'axe de visée z diffère du mouvement qui lui est réellement appliqué. Dans ce contexte, il peut être avantageux de déterminer le mouvement de cet axe de visée au niveau de la matrice des détecteurs, sur la base d'un traitement numérique des images captées.

Un tel procédé de traitement numérique visant à déterminer le mouvement de l'axe de visée entre deux images captées consécutivement est décrit dans le document US 5 502 482 ou encore dans le document FR 2 828 315.

Un mode de réalisation de la présente invention peut avantageusement être mis en oeuvre dans un contexte de capture d'une scène sensiblement statique, car il permet d'améliorer la qualité des images captées, en réduisant à la fois le bruit spatial et le bruit temporel.

Dans un mode de réalisation de la présente invention, on peut se fonder sur des données qui peuvent être déterminées à partir de la stabilisation des images pour estimer de façon simple la fonction de filé, ces données étant relatives au tangage, au roulis et au lacet des images traitées. Afin d'estimer plus précisément la fonction de filé, on peut en outre prend en compte des données de configuration de système telles que par exemple la température de fonctionnement, ou encore un facteur d'échelle entre les dimensions angulaires de l'espace de l'image et les dimensions linéaires de la matrice des détecteurs.

On peut ainsi, dans certains cas, représenter la fonction de filé dans un repère adapté qui permet de simplifier nettement les calculs à effectuer. Notamment, il convient de noter que lorsque la fonction de filé est représentée dans des coordonnées polaires, elle peut être une fonction monodimensionnelle, cette fonction monodimensionnelle étant différente à chaque trame.

**Revendications**

1. Procédé de traitement d'images dans un système de capture (10) d'une série d'images d'une scène comprenant un dispositif de capture d'images (11) ayant une matrice (52) de détecteurs de flux orientée selon un axe de visée (z), ledit dispositif de capture d'images comprenant un module de stabilisation (12) qui stabilise l'axe de visée des images captées, ledit axe de visée étant animé d'un mouvement défini, cyclique et présentant sur un cycle, au niveau de la matrice des détecteurs de flux, une amplitude de n pixels, n étant un nombre entier supérieur à 2, et inférieur à $n_{max}$, $n_{max}$ étant déterminé de sorte que les images captées au cours d'un cycle présentent une partie majoritairement commune;

   ledit procédé comprenant les étapes suivantes appliquer à une série d'images ($N_{1-k}$) successives captées pendant un cycle :

   /1/ répéter les étapes /i/ et /ii/ depuis la première image captée jusqu'à la dernière image captée de ladite série et obtenir une image intermédiaire ($I_{intermédiaire}$):

   - /i/ caler (21) une image suivante ($N_{i+1}$) de ladite série d'images sur une image précédente ($N_i$) en fonction du mouvement défini ;
   - /ii/ corriger (22) un bruit spatial relatif aux détecteurs de flux affectant la partie commune des images suivante et précédente, en fonction d'au moins un décalage déterminé entre une valeur d'un pixel de référence ($P_1$) dans la partie commune de l'image précédente (31) et une valeur d'un pixel ($P_2$) suivant qui représente un même point de ladite scène que ledit pixel de référence dans ladite partie commune de l'image suivante (32) ;

   /2/ obtenir (25) une image captée corrigée de la scène en appliquant un produit de convolution (26) entre ladite image intermédiaire et une fonction d'étalement de point de correction ($PSF_{global}$), ladite fonction d'étalement de point de correction étant déterminée sur la base du mouvement défini.

2. Procédé de traitement d'images selon la revendication 1, dans lequel le mouvement défini est effectué à vitesse constante ou à accélération constante.

3. Procédé de traitement d'images selon la revendication 1 ou 2, dans lequel la fonction d'étalement de point de correction vérifie l'équation suivante

$$PSF_{global}(x,y,N_{1-k}) = PSF_{capt}(x,y) \otimes \sum_{i=1}^{k} PSF_{motion}(x,y,N_i) + B(x,y)$$

   où $PSF_{global}$ est la fonction d'étalement de point de correction ; ;
   où x et y sont des coordonnées d'un détecteur au sein de la matrice de détecteurs ;
   où $N_{1-k}$ est la série d'images captées, chaque image captée étant représentée par un indice $N_i$ pour i compris entre 1 et k, k étant supérieur à 1;
   où $PSF_{capt}$ est une fonction d'étalement de point relative au capteur au niveau du détecteur de coordonnées x et y dans la matrice ;
   où $PSF_{motion}$ est une fonction d'étalement de point relative au mouvement défini de l'axe de visée ; et
   où B(x,y) vérifie l'équation suivante :

$$B(x,y) = \sum_{i=1}^{k} B(x,y,N_i)$$

   où $B(x,y,N_i)$ est la somme des bruits temporels et spatiaux affectant une image captée d'indice $N_i$.

4. Procédé de traitement d'images selon l'une quelconque des revendications précédentes, dans lequel le module de stabilisation est adapté pour stabiliser les images captées sur la base d'un traitement numérique des images.

5. Procédé de traitement d'images selon l'une quelconque des revendications précédentes, dans lequel le module de stabilisation est un module de stabilisation inertielle mécanique.

6. Procédé de traitement d'images selon l'une quelconque des revendications précédentes, dans lequel le mouvement défini est un cercle présentant un diamètre d'une valeur supérieure ou égale à 3 pixels au niveau de la matrice de détecteurs de flux.

7. Procédé de traitement d'images selon l'une quelconque des revendications précédentes, dans lequel la vitesse du mouvement défini est déterminée en fonction d'un temps d'intégration des détecteurs de flux de la matrice des détecteurs (52) du dispositif de capture d'images (11).

8. Procédé de traitement d'images selon l'une quelconque des revendications précédentes, dans lequel on corrige successivement, à partir du décalage déterminé, des valeurs de pixels de la partie commune de l'image précédente (31) et de l'image suivante (32), en parcourant une chaîne de pixels comprenant, à partir du pixel de référence ($P_1$) dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

9. Procédé de traitement d'images selon la revendication 8, dans lequel la position du pixel de référence ($P_1$) dans la partie commune est déterminée en fonction du mouvement défini et d'une période de temps écoulée entre lesdites images.

10. Procédé de traitement d'images selon l'une quelconque des revendications précédentes, dans lequel la position du pixel suivant dans l'image suivante est déterminée à partir de la position du pixel de référence dans l'image précédente en fonction de caractéristiques du mouvement défini appliqué à l'axe de visée et d'une période de temps écoulée entre lesdites images.

11. Procédé de traitement d'images selon l'une quelconque des revendications précédentes, dans lequel le mouvement défini est déterminé par application d'un traitement numérique des images précédente et suivante.

12. Système de capture d'une série d'images d'une scène comprenant un dispositif de capture d'images (11) ayant une matrice de détecteurs de flux orientée selon un axe de visée,
ledit système de capture comprenant :

- un module de stabilisation (12) qui stabilise l'axe de visée des images captées;
- un module de contrôle de mouvement (13) qui est adapté pour appliquer à l'axe de visée un mouvement défini, cyclique et présentant sur un cycle au niveau de la matrice des détecteurs de flux une amplitude de n pixels, n étant un nombre entier supérieur à 2, et inférieur à $n_{max}$, $n_{max}$ étant déterminé de sorte que les images captées au cours d'un cycle présentent une partie majoritairement commune ;
- un module de traitement intermédiaire (15) adapté pour fournir une image intermédiaire à partir de la série d'images, captées pendant un cycle du mouvement défini, sur la base d'une répétition des opérations suivantes :

- caler une image suivante ($N_{i+1}$) de la dite série d'images sur une image précédente ($N_i$) en fonction du mouvement défini ; et
- corriger un bruit spatial relatifs auxdits détecteurs de flux et affectant la partie commune des images précédente et suivante, sur la base dudit mouvement défini, en fonction d'au moins un décalage déterminé entre une valeur d'un pixel de référence ($P_1$) dans la partie commune d'une image précédente (31) et une valeur d'un pixel suivant ($P_2$) qui représente un même point de ladite scène que ledit pixel de référence dans ladite partie commune d'une image suivante (32) ;

- un module de correction (14) adapté pour fournir une image captée corrigée de la scène en appliquant un produit de convolution (26) entre ladite image intermédiaire et une fonction d'étalement de point de correction ($PSF_{global}$), ladite fonction d'étalement de point de correction étant déterminée sur la base du mouvement défini.

13. Système de traitement d'images selon la revendication 12, dans lequel le module de contrôle de mouvement (13) est adapté pour appliquer le mouvement défini à vitesse constante ou à accélération constante.

14. Système de traitement d'images selon la revendication 12 ou 13, dans lequel la fonction d'étalement de point de correction vérifie l'équation suivante :

$$PSF_{global}(x, y, N_{1-k}) = PSF_{capt}(x, y) \otimes \sum_{i=1}^{k} PSF_{motion}(x, y, N_i) + B(x, y)$$

où $PSF_{global}$ est la fonction d'étalement de point de correction ; où x et y sont des coordonnées d'un détecteur au sein de la matrice de détecteurs ;

où $N_{1-k}$ est la série d'images captées, chaque image captée étant représentée par un indice $N_i$ pour i compris entre 1 et k, k étant supérieur à 1 ;

où $PSF_{capt}$ est une fonction d'étalement de point relative au capteur au niveau du détecteur de coordonnées x et y dans la matrice ;

où $PSF_{motion}$ est une fonction d'étalement de point relative au mouvement défini de l'axe de visée ; et

où B(x,y) vérifie l'équation suivante :

$$B(x, y) = \sum_{i=1}^{k} B(x, y, N_i)$$

où $B(x,y,N_i)$ est la somme des bruits temporels et spatiaux affectant une image captée d'indice $N_i$.

**15.** Système de capture selon l'une quelconque des revendications 12 à 14, **caractérisé en ce que** le module de contrôle de mouvement (13) est adapté pour appliquer un mouvement défini correspondant à un cercle présentant un diamètre d'une valeur supérieure ou égale à 3 pixels au niveau de la matrice de détecteurs de flux.

**16.** Programme d'ordinateur destiné à être installé dans un système de capture (10) selon l'une quelconque des revendications 12 à 15, comprenant des instructions aptes à mettre en oeuvre le procédé selon l'une quelconque des revendications 1 à 11, lors d'une exécution du programme par des moyens de traitement du système de capture.

## Patentansprüche

**1.** Verfahren zum Verarbeiten von Bildern in einem System zum Erfassen (10) einer Reihe von Bildern einer Szene, umfassend eine Bilderfassungsvorrichtung (11) mit einer Matrix (52) von Flussdetektoren, die entlang einer Sichtachse (z) ausgerichtet sind,

wobei die Bilderfassungsvorrichtung ein Stabilisierungsmodul (12) umfasst, das die Sichtachse der aufgenommenen Bilder stabilisiert, wobei die Sichtachse durch eine definierte, zyklische Bewegung animiert wird und über einen Zyklus auf der Ebene der Matrix der Flussdetektoren eine Amplitude von n Pixeln aufweist, wobei n eine ganze Zahl größer als 2 und kleiner als $n_{max}$ ist, wobei $n_{max}$ so bestimmt wird, dass die Bilder, die während eines Zyklus aufgenommen wurden, einen mehrheitlich gemeinsamen Teil aufweisen;

wobei das Verfahren die folgenden Schritte umfasst, die auf eine Reihe von Bildern ($N_{1-k}$) anzuwenden sind, die während eines Zyklus erfasst werden:

/1/ Wiederholen der Schritte /i/ und /ii/ vom ersten aufgenommenen Bild bis zum letzten aufgenommenen Bild der Reihe und Erhalten eines Zwischenbildes ($I_{intermédiaire}$):

- /i/ Abstimmen (21) eines nachfolgenden Bildes ($N_{i+1}$) der Reihe von Bildern auf ein vorheriges Bild ($N_i$) gemäß der definierten Bewegung;
- /ii/ Korrigieren (22) eines räumlichen Rauschens in Bezug auf die Flussdetektoren, das den gemeinsamen Abschnitt des nachfolgenden und des vorherigen Bildes beeinflusst, als Funktion mindestens eines bestimmten Versatzes zwischen einem Wert eines Referenzpixels ($P_1$) im gemeinsamen Abschnitt des vorherigen Bildes (31) und einem Wert eines nachfolgenden Pixels ($P_2$), der den gleichen Punkt der Szene darstellt wie das Referenzpixel in dem gemeinsamen Teil des nachfolgenden Bildes (32);

/2/ Erhalten (25) eines korrigierten erfassten Bildes der Szene durch Aufbringen eines Faltungsprodukts (26) zwischen dem Zwischenbild und einer Korrekturpunkt-Spreizfunktion ($PSF_{global}$), wobei die Korrekturpunkt-Spreizfunktion auf der Grundlage der definierten Bewegung bestimmt wird.

**2.** Verfahren zum Verarbeiten von Bildern nach Anspruch 1, wobei die definierte Bewegung mit konstanter Geschwindigkeit oder konstanter Beschleunigung ausgeführt wird.

3. Verfahren zur Verarbeitung von Bildern nach Anspruch 1 oder 2, wobei die Korrekturpunkt-Spreizfunktion die folgende Gleichung überprüft

$$PSF_{global}(x, y, N_{1-k}) = PSF_{capt}(x, y) \otimes \sum_{i=1}^{k} PSF_{motion}(x, y, N_i) + B(x, y)$$

wobei $PSF_{global}$ die Korrekturpunkt-Spreizfunktion ist;
wobei x und y Koordinaten eines Detektors innerhalb der Detektormatrix sind;
wobei $N_{1-k}$ die Reihe der aufgenommenen Bilder ist, wobei jedes aufgenommene Bild durch einen Index $N_i$ mit i zwischen 1 und k dargestellt ist, wobei k größer als 1 ist;
wobei $PSF_{capt}$ eine Punktspreizfunktion in Bezug auf den Sensor am Detektor mit x- und y-Koordinaten in der Matrix ist;
wobei $PSF_{motion}$ eine Punktspreizfunktion in Bezug auf die definierte Bewegung der Sichtachse ist; und
wobei B(x,y) die folgende Gleichung überprüft:

$$B(x, y) = \sum_{i=1}^{k} B(x, y, N_i)$$

wobei $B(x,y,N_i)$ die Summe des zeitlichen und räumlichen Rauschens ist, das ein aufgenommenes Bild des Index $N_i$ beeinflusst.

4. Verfahren zum Verarbeiten von Bildern nach einem der vorherigen Ansprüche, wobei das Stabilisierungsmodul angepasst ist, um die auf der Grundlage der digitalen Bildverarbeitung aufgenommenen Bilder zu stabilisieren.

5. Verfahren zum Verarbeiten von Bildern nach einem der vorherigen Ansprüche, wobei das Stabilisierungsmodul ein mechanisches Trägheitsstabilisierungsmodul ist.

6. Verfahren zum Verarbeiten von Bildern nach einem der vorherigen Ansprüche, wobei die definierte Bewegung ein Kreis mit einem Durchmesser von 3 Pixeln oder mehr an der Matrix von Flussdetektoren ist.

7. Verfahren zum Verarbeiten von Bildern nach einem der vorherigen Ansprüche, wobei die Geschwindigkeit der definierten Bewegung als Funktion einer Integrationszeit der Flussdetektoren der Matrix (52) von Flussdetektoren der Bilderfassungsvorrichtung (11) bestimmt wird.

8. Verfahren zum Verarbeiten von Bildern nach einem der vorherigen Ansprüche, bei dem Pixelwerte des gemeinsamen Abschnitts des vorherigen Bildes (31) und des nachfolgenden Bildes (32) nacheinander aus dem bestimmten Versatz durch Durchlaufen einer Pixelkette korrigiert werden, die ausgehend vom Referenzpixel ($P_1$) im vorherigen Bild, Pixel, die abwechselnd im nachfolgenden Bild und im vorherigen Bild übereinstimmen, ein Pixel des nächsten Bildes, der einem Pixel des vorherigen Bildes entspricht, wenn die Pixel dem gleichen Punkt in der aufgenommenen Szene entsprechen, und ein Pixel des vorherigen Bildes, der einem Pixel des nächsten Bildes entspricht, wenn die Pixel dem gleichen Flussdetektor der Matrix (52) von Flussdetektoren entsprechen, umfasst.

9. Bildverarbeitungsverfahren nach Anspruch 8, wobei die Position des Referenzpixels ($P_1$) im gemeinsamen Teil als Funktion der definierten Bewegung und einer zwischen den Bildern verstrichenen Zeitspanne bestimmt wird.

10. Verfahren zum Verarbeiten von Bildern gemäß einem der vorherigen Ansprüche, wobei die Position des n Pixels im nachfolgenden Bild aus der Position des Referenzpixels im vorherigen Bild gemäß den Eigenschaften der definierten Bewegung, die auf die Sichtachse angewendet wird, und einer Zeitspanne, die zwischen den Bildern verstrichen ist, bestimmt wird.

11. Verfahren zur Verarbeitung von Bildern nach einem der vorherigen Ansprüche, bei dem die definierte Bewegung durch Anwendung einer digitalen Verarbeitung des vorherigen und des nachfolgenden Bildes bestimmt wird.

**12.** System zum Erfassen einer Reihe von Bildern einer Szene, umfassend eine Bilderfassungsvorrichtung (11) mit einer Matrix von Flussdetektoren, die entlang einer Sichtachse ausgerichtet sind, wobei das Erfassungssystem umfasst:

- ein Stabilisierungsmodul (12), das die Sichtachse der aufgenommen Bilder stabilisiert;
- ein Bewegungssteuerungsmodul (13), das angepasst ist, um auf die Sichtachse eine definierte, zyklische Bewegung mit einer Amplitude von n Pixeln über einen Zyklus auf der Ebene der Matrix der Flussdetektoren anzuwenden, wobei n eine ganze Zahl größer als 2 und kleiner als $n_{max}$ ist, wobei $n_{max}$ so bestimmt wird, dass die während eines Zyklus aufgenommenen Bilder einen mehrheitlich gemeinsamen Teil aufweisen;
- ein Zwischenverarbeitungsmodul (15), das angepasst ist, um ein Zwischenbild aus der Reihe von Bildern bereitzustellen, das während eines Zyklus der definierten Bewegung aufgenommen wird, basierend auf einer Wiederholung der nachfolgenden Vorgänge:

- Abstimmen eines nachfolgenden Bildes ($N_{i+1}$) der Reihe von Bildern auf ein vorheriges Bild ($N_i$) als Funktion der definierten Bewegung; und
- Korrigieren eines räumlichen Rauschens in Bezug auf die Flussdetektoren, das den gemeinsamen Abschnitt des nachfolgenden und des vorherigen Bildes beeinflusst, basierend auf der definierten Bewegung, als Funktion mindestens eines bestimmten Versatzes zwischen einem Wert eines Referenzpixels ($P_1$) im gemeinsamen Teil eines vorherigen Bildes (31) und einem Wert eines nachfolgenden Pixels ($P_2$), das den gleichen Punkt der Szene wie das Referenzpixel in dem gemeinsamen Abschnitt eines nachfolgenden Bildes (32) darstellt;

- ein Korrekturmodul (14), das angepasst ist, um ein korrigiertes erfasstes Bild der Szene bereitzustellen, indem ein Faltungsprodukt (26) zwischen dem Zwischenbild und einer Korrekturpunkt-Spreizfunktion ($PSF_{global}$) angewandt wird, wobei die Korrekturpunkt-Spreizfunktion auf der Grundlage der definierten Bewegung bestimmt wird.

**13.** Bildverarbeitungssystem nach Anspruch 12, wobei das Bewegungssteuerungsmodul (13) angepasst ist, um die definierte Bewegung mit konstanter Geschwindigkeit oder konstanter Beschleunigung anzuwenden.

**14.** Bildverarbeitungssystem nach Anspruch 12 oder 13, in dem die Korrekturpunkt-Spreizfunktion die folgende Gleichung überprüft:

$$PSF_{global}(x, y, N_{1-k}) = PSF_{capt}(x, y) \otimes \sum_{i=1}^{k} PSF_{motion}(x, y, N_i) + B(x, y)$$

wobei $PSF_{global}$ die Korrekturpunkt-Spreizfunktion ist;
wobei x und y Koordinaten eines Detektors innerhalb der Detektormatrix sind;
wobei $N_{1-k}$ die Reihe der aufgenommenen Bilder ist, wobei jedes aufgenommene Bild durch einen Index $N_i$ mit i zwischen 1 und k dargestellt ist, wobei k größer als 1 ist;
wobei $PSF_{capt}$ eine Punktspreizfunktion in Bezug auf den Sensor am Detektor mit x- und y-Koordinaten in der Matrix ist;
wobei $PSF_{motion}$ eine Punktspreizfunktion in Bezug auf die definierte Bewegung der Sichtachse ist; und
wobei B(x,y) die folgende Gleichung überprüft:

$$B(x, y) = \sum_{i=1}^{k} B(x, y, N_i)$$

wobei $B(x,y,N_i)$ die Summe des zeitlichen und räumlichen Rauschens ist, das ein aufgenommenes Bild des Index $N_i$ beeinflusst.

**15.** Erfassungssystem nach einem der Ansprüche 12 bis 14, **dadurch gekennzeichnet, dass** das Bewegungssteuerungsmodul (13) angepasst ist, um eine definierte Bewegung entsprechend einem Kreis mit einem Durchmesser von 3 Pixeln oder mehr an der Matrix von Flussdetektoren anzuwenden.

**16.** Computerprogramm zur Installation in einem Erfassungssystem (10) nach einem der Ansprüche 12 bis 15, umfassend Anweisungen zur Ausführung des Verfahrens nach einem der Ansprüche 1 bis 11, wenn das Programm durch Verarbeitungsmittel des Erfassungssystems ausgeführt wird.

**Claims**

**1.** A method of processing images in a system (10) for capturing a series of images of a scene comprising an image capture device (11) having a matrix (52) of flux sensors oriented along a sighting axis (z),
said image capture device comprising a stabilization module (12) which stabilizes the sighting axis of the captured images, said sighting axis being subjected to a defined motion cyclic and having an amplitude of n pixels in a cycle at the flux sensor matrix, n being a whole number greater than 2 and smaller than $n_{max}$, $n_{max}$ being determined in such a way that the images captured in a cycle have a predominantly common part;
said method comprising the following steps, applied to a series of successive images ($N_{1-k}$) captured during a cycle:

/1/ repeating steps /i/ and /ii/ from the first captured image to the last captured image of said series and obtain an intermediate image ($I_{intermediate}$):

- /i/ placing (21) a subsequent image ($N_{i+1}$) of said series of images on a preceding image ($N_i$) as a function of the defined motion;
- /ii/ correcting (22) a spatial noise due to the flux sensors and affecting the common part of the images of the preceding and subsequent images as a function of at least one measured offset between a value of a reference pixel ($P_1$) in the common part of the preceding image (31) and a value of a subsequent pixel ($P_2$) which represents the same point of said scene as said reference pixel in said common part of the subsequent image (32);

/2/ obtaining (25) a corrected captured image of the scene by applying a convolution product (26) between said intermediate image and a corrective point spread function ($PSF_{global}$), said corrective point spread function being determined according to the defined motion.

**2.** The image processing method as claimed in claim 1, wherein the defined motion is provided at constant velocity or at constant acceleration.

**3.** The image processing method as claimed in claim 1 or 2, wherein the corrective point spread function obeys the following equation:

$$PSF_{global}(x, y, N_{1-k}) = PSF_{capt}(x, y) \otimes \sum_{i=1}^{k} PSF_{motion}(x, y, N_i) + B(x, y)$$

where $PSF_{global}$ is the corrective point spread function;
x and y are coordinates of a sensor within the sensor matrix;
$N_{1-k}$ is the series of captured images, each captured image being represented by an index $N_i$ where i is in the range from 1 to k, k being greater than 1;
$PSF_{capt}$ is a point spread function relating to the capture device at a sensor with the coordinates x and y in the matrix;
$PSF_{motion}$ is a point spread function relating to the defined motion of the sighting axis; and
B(x,y) obeys the following equation:

$$B(x, y) = \sum_{i=1}^{k} B(x, y, N_i)$$

where $B(x,y,N_i)$ is the sum of the temporal and spatial noises affecting a captured image with the index $N_i$.

**4.** The image processing method as claimed in any one of the preceding claims, wherein the stabilization module is adapted to stabilize the captured images on the basis of a digital processing of the images.

5. The image processing method as claimed in any one of the preceding claims, wherein the stabilization module is a mechanical inertial stabilization module.

6. The image processing method as claimed in any one of the preceding claims, wherein the defined motion is a circle having a diameter greater than or equal to three pixels at the position of the flux sensor matrix.

7. The image processing method as claimed in any one of the preceding claims, wherein the velocity of the defined motion is determined as a function of an integration time of the flux sensors of the sensor matrix (52) of the image capture device (11).

8. The image processing method as claimed in any one of the preceding claims, wherein values of pixels of the common part of the preceding image (31) and the subsequent image (32) are corrected in succession, on the basis on the measured offset, by moving along a chain of pixels which, starting from the reference pixel ($P_1$) in the preceding image, pixels corresponding to each other alternately in the subsequent image and in the preceding image, a pixel of the subsequent image corresponding to a pixel of the preceding image when said pixels correspond to the same point of the captured scene, and a pixel of the preceding image corresponding to a pixel of the subsequent image when said pixels correspond to the same flux sensor of the sensor matrix.

9. The image processing method as claimed in claim 8, wherein the position of the reference pixel ($P_1$) in the common part is determined as a function of the defined motion and of a time interval which elapses between said images.

10. The image processing method as claimed in any one of the preceding claims, wherein the position of the subsequent pixel in the subsequent image is determined on the basis of the position of the reference pixel in the preceding image as a function of characteristics of the defined motion imparted to the sighting axis and of a time interval which elapses between said images.

11. The image processing method as claimed in any one of the preceding claims, wherein the defined motion is determined by the application of digital processing of the preceding and subsequent images.

12. A system for capturing a series of images of a scene, comprising an image capture device (11) having a matrix of flux sensors oriented along a sighting axis, said capture system comprising:

- a stabilization module (12) which stabilizes the sighting axis of the captured images;
- a motion control module (13) which is adapted to impart to the sighting axis a motion which is defined and cyclic and has an amplitude of n pixels over one cycle at the position of the flux sensor matrix, where n is a whole number greater than 2 and smaller than $n_{max}$, $n_{max}$ being determined in such a way that the images captured in the course of a cycle have a predominantly common part;
- an intermediate processing module (15) adapted to provide an intermediate image based on the series of images captured during a cycle of the defined motion, on the basis of a repetition of the following operations:
- placing a subsequent image ($N_{i+1}$) of said series of images on a preceding image ($N_i$) as a function of the defined motion;
- correcting a spatial noise relating to the flux sensors and affecting the common part of the preceding and subsequent images on the basis of said defined motion, as a function of at least one measured offset between a value of a reference pixel ($P_1$) in the common part of the preceding image (31) and a value of a subsequent pixel ($P_2$) which represents the same point of said scene as said reference pixel in said common part of a subsequent image (32);
- a correction module (14) adapted to provide a corrected captured image of the scene by applying a convolution product (26) between the intermediate image and a corrective point spread function ($PSF_{global}$), said corrective point spread function being determined on the basis of the defined motion.

13. The image processing system as claimed in claim 12, wherein the motion control module (13) is adapted to impart the defined motion at constant velocity or at constant acceleration.

14. The image processing system as claimed in claim 12 or 13, wherein the corrective point spread function obeys the following equation:

$$PSF_{global}(x, y, N_{1-k}) = PSF_{capt}(x, y) \otimes \sum_{i=1}^{k} PSF_{motion}(x, y, N_i) + B(x, y)$$

where $PSF_{global}$ is the corrective point spread function;

x and y are the coordinates of a sensor within the sensor matrix;

$N_{1-k}$ is the series of captured images, each captured image being represented by an index $N_i$ where i is in the range from 1 to k, k being greater than 1;

$PSF_{capt}$ is a point spread function relating to the capture device at a sensor with the coordinates x and y in the matrix;

$PSF_{motion}$ is a point spread function relating to the defined motion of the sighting axis; and

B(x,y) obeys the following equation:

$$B(x, y) = \sum_{i=1}^{k} B(x, y, N_i)$$

where $B(x,y,N_i)$ is the sum of the temporal and spatial noises affecting a captured image with the index $N_i$.

15. The capture system as claimed in any one of claims 12 to 14, wherein the motion control module (13) is adapted to impart a defined motion corresponding to a circle having a diameter greater than or equal to three pixels at the position of the flux sensor matrix.

16. A computer program for installation in a capture system (10) as claimed in any one of claims 12 to 15, comprising instructions for implementing the method as claimed in any one of claims 1 to 11 when the program is executed by processing means of the capture system.

FIG.1.

FIG.3.

FIG 4

$N_i = N_1$ — 20

CALER IMAGE SUIVANTE $N_{i+1}$
SUR
IMAGE PRÉCÉDENTE $N_i$ — 21

CORRIGER
BRUIT SPATIAL — 22

23 — $i < k_{-1}$

25

$I_{INTERMÉDIAIRE}$

$N_i = N_{i+1}$ — 24

$\otimes PSF_{GLOBALE}$

26

FIG.2.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2828315
- US 5502482 A